# EUROPEAN PATENT SPECIFICATION

(11) **EP 1 013 164 B1**
(45) Date of publication and mention of the grant of the patent: **20.03.2002**
(21) Application number: 99204073.3
(22) Date of filing: 01.12.1999
(51) Int. Cl.: A01G 25/16

(54) **Electronic control device with automatic protection against the condition of exhausted battery for bistable type solenoid valve, particularly for watering systems**
Elektronische Steurvorrichtung mit automatischem Schutz gegen den Zustand von verbrauchten Batterien für bistabile Magnetventile, insbesondere für Beregnungssysteme
Appareil électronique de control avec protection automatique contre la condition d'accumulateur épuisé pour électrovanne du type bistable, particulièrement pour des systèmes d'arrosage

(30) Priority: 14.12.1998 IT MI982673
(43) Date of publication of application: 28.06.2000
(73) Proprietor: CLABER S.P.A., I-33080 Fiume Veneto Pordenone (IT)
(72) Inventor: Brundisini, Andrea, 40125 Bologna (IT)
(74) Representative: Mittler, Enrico

(56) References cited:
- WO-A-93/24982
- FR-A- 2 612 276
- US-A- 5 661 349

## Description

The present invention concerns an electronic control device with automatic protection against the condition of exhausted battery for bistable type solenoid valve, particularly for watering systems.

Watering systems for lawns, gardens, kitchen gardens and cultivated spaces are generally based on the use of solenoid valves that determine the delivery of water in the various sectors to be watered.

The control of the solenoid valves is entrusted to programmable electronic control devices with various complexity that can be connected with the power of mains or operate with battery, in which case, for power saving reasons, valves with bistable type electric actuators are essential.

In the second case what obviously happens is that the battery goes down and it is then necessary to detect the condition of exhausted battery and to operate on the controlled solenoid valves in order to lock them in a closing position. In this way, considering that bistable type solenoid valves require driving controls of short duration, it is possible to prevent that at a certain point of the discharging of the battery the latter still has sufficient energy to control the opening of the solenoid valve but not its subsequent closing, with the consequence that the watering would continue without interruption until the moment in which someone notices the problem.

For such reason the control devices of the type with battery are usually provided with electronic circuits capable to detect the lowering of the battery voltage to a minimum value below which no further activation of the solenoid valves being controlled is permitted.

In this way, besides, what happens is that the detection circuit determines the locking of the system when in reality the battery still has sufficient energy for several additional activations.

In addition, the detection circuit has a cost of its own, that obviously affects the total cost of the control device.

Object of the present invention is now to realise an electronic control device supplied with battery for bistable type solenoid valve, particularly but not exclusively for watering systems, that does not require a detection circuit for the condition of exhausted battery.

According to the invention such object has been attained with an electronic control device for bistable type solenoid valve, comprising a power supply battery and a logic control unit to transfer electric power from the battery to the solenoid valve, characterized in that it comprises a condenser set in parallel to the battery and a switch having first switching means interposed between the battery and the condenser and second switching means interposed between the condenser and the solenoid valve, said switch being operated by said logic control unit in order to determine, in a first operating condition, the charging of the condenser and, in a second and third operating condition, the application of control voltages with opposite sign from the condenser to the solenoid valve for the closing and, respectively, the opening of the same solenoid valve, said logic control unit being programmed in such a way that each request for the opening of the solenoid valve brings about the setting of the switch in said first operating condition for the charging of the condenser in first place, then the preliminary activation of the switch in said second operating condition for the closing of the solenoid valve after a first preset time has elapsed since the previous closing operation of the same solenoid valve, then again the return of the switch in said first operating condition for the new charging of the condenser and finally the operation of the switch in said third operating condition for the opening of the solenoid valve after a subsequent second preset time shorter than the first one.

In this way, as it will be better seen hereinafter, it is possible to have a guarantee that at a certain point of the discharging of the battery, or even in case of removal of the same battery, a residual energy however remains in the condenser that is capable to allow the closing of the solenoid valve without any further possibility to open it again.

The characteristics of the present invention will be made evident by the following detailed description of an embodiment thereof that is illustrated as a non limiting example in the enclosed drawings, in which:

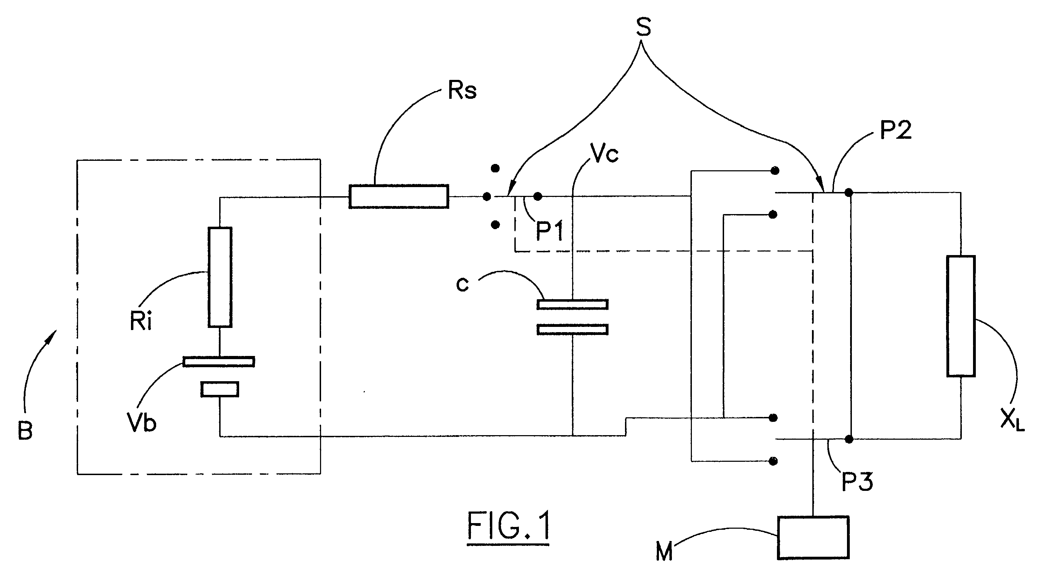

Fig. 1 shows the equivalent electric circuit of the part of control device that provides for the protection against the condition of exhausted battery.

With reference to the drawing, a battery considered to be made of a voltage generator Vb and of a equivalent internal resistance Ri is indicated by B as a whole.

In sequence to the latter a series resistance Rs is set and in parallel to the series circuit consisting of Vb, Ri and Rs a condenser C is set at the ends of which a voltage Vc is thus present.

A switch S with two poles P1, P2 and P3 and three operating positions ("ON" upward in Figure 1, "CHARGE" in the center, "OFF" downward) controlled by a microprocessor logic control unit M provides to charge the condenser C at the voltage Vc when the pole P1 of the switch is in the "CHARGE" position and to subsequently apply the voltage Vc thus obtained, now with a sign and then with the other one according to whether the poles P2 and P3 of the switch are in the position "ON" or "OFF," to a load representative of the solenoid valve (or solenoid valves) being controlled, or better of the bistable solenoid that controls its opening and closing for the starting and, respectively, the stopping of the watering.

The operating principle of the circuit herein described, and therefore of the protection of exhausted battery that it represents, is the following.

Let's consider that at the moment of the release of the switch S after a start (position "ON") or a stop (position "OFF") of the solenoid valve, therefore after a discharge of the condenser C on the charge X_{L} (for example for a time ts= 50msec), the condenser C is at a voltage Vin, almost identical in the two cases.

Subsequently, that is with the switch S in the rest position of Fig. 1, the charge voltage of the condenser varies according to the following ratio:${\text{Vc(t) = Vin+(Vb-Vin)*(1-e}}^{\text{-[t/(Ri+Rs)*C]}}$

Therefore, after 2 seconds the voltage Vc at the ends is:${\text{Vc(2sec) = Vin+(Vb-Vin)*(1-e}}^{\text{-[2/(Ri+Rs)*C]}}$ whereas after 8 seconds the voltage Vc becomes:${\text{Vc(8sec) = Vin+(Vb-Vin)*(1-e}}^{\text{-[8/(Ri+Rs)*C]}}$

The difference between the two voltages Vc(8sec) and Vc(2sec) is the following:${\text{ΔVc=[Vc(8sec)-Vc(2sec)]=Vin+(Vb-Vin)*(1-e}}^{\text{-[8/(Ri+Rs)*C]}} {\text{)-Vin-(Vb-Vin)*(1-e}}^{\text{-[2/(Ri+Rs)*C]}} \text{)}$ that is${\text{ΔVc=(Vb-Vin)*(1-e}}^{\text{-[8/(Ri+Rs)*C]}} {\text{-1+e}}^{\text{-[2/(Ri+Rs)*C]}} {\text{)=(Vb-Vin)*(e}}^{\text{-[2/(Ri+Rs)*C]}} {\text{-e}}^{\text{-[8/(Ri+Rs)*C]}} \text{)}$ that is yet${\text{ΔVc=(Vb-Vin)*[e}}^{\text{-[2/(Ri+Rs)*C]}} {\text{-e}}^{\text{-[8/(Ri+Rs)*C]}} \text{]}$

If we consider for example the following values with charged battery and exhausted battery with Rs = 68 Ohm, C = 4700 µF and X_{L} = R_{L}= 5 Ohm (having approximated the charge X_{L} with a simple resistance, since the effect of the inductor of the same charge is negligible):
- Charged battery:: Vb = 9,5V
Ri= 10 Ohm$\text{Vin=Vb*e} {\text{}}^{{\text{-[ts/R}}_{\text{L}} \text{*C]}} {\text{=9,5*e}}^{\text{-[0,05/(5*0,0047)]}} \text{=1,13V}$
- Exhausted battery:: Vb = 7,0V
Ri= 100 Ohm$\text{Vin=Vb*e} {\text{}}^{{\text{-[ts/R}}_{\text{L}} \text{*C]}} {\text{=7,0*e}}^{\text{-[0,05/(5*0,0047)]}} \text{=0,84V}$
by substituting we obtain:${\text{ΔVc (charged battery)=(9,5-1,13)*[e}}^{\text{-[2/(10+68)*0,0047]}} {\text{-e}}^{\text{-[8/(10+68)*0,0047]}} \text{]=0,036V}$${\text{ΔVc (exhausted battery)=(7,0-0,84)*[e}}^{\text{-[2/(100+68)*0,0047]}} {\text{-e}}^{\text{-[8/(100+68)*0,0047]}} \text{]=0,490V}$

As it can be observed, the difference between the voltage Vc after 2 seconds and that after 8 seconds increases when decreasing the battery charges, and that by virtue of the increase of the equivalent internal resistance Ri of the battery when the same goes down.

By taking advantage of this principle, the protection against the condition of exhausted battery takes place, according to the invention, in the following way.

Each time that it is necessary to open the valve, the microprocessor M controls a closing operation at first (switch S in "OFF" position), while previously insuring that a possible previous closing operation has taken place since more than 8 seconds. Otherwise, it waits that 8 seconds elapse since the last aforesaid operation (switch S in "CHARGE" position).

In this way there is a guarantee that the condenser C has reached the charge voltage Vc (8sec) before controlling the closing of the solenoid valve.

After having sent the command for the closing of the valve, the microprocessor waits 2 seconds so as to guarantee the voltage value Vc (2sec) on the condenser C (switch S in "CHARGE" position) and at that point it sends the control for the opening of the valve (switch S in "ON" position).

Substantially, the microprocessor operates in such a way that the charge voltage (Vc (8sec)) of the condenser C at the moment of the closing of the valve is always higher than the one ( (Vc (2sec)) present at the moment of the opening of the same valve.

As already said, the difference between the two voltages (ΔVc= Vc (8sec)- Vc (2sec)) is as higher as the battery is the more discharged.

There is therefore the guarantee that at a certain point of the exhausting of the battery the condenser C however contains a residual energy capable to allow the closing of the valve without being possible to open it again.

At the same time the valve continues to be opened and closed until the battery allows it and not until the detection circuit decides for it, as in the control devices according to the known technique.

In addition the present invention prevents that, in case of request for the opening of the valve with battery during the stage of replacement or, in any case, removal for any reason, the last power present in the condenser C is used to open the valve without any energy left, once the battery is disconnected, for the closing back of the same.

Besides it is necessary to keep in mind that after the last possible closing enough power must be present in the battery so as to guarantee the operation of the control microprocessor. Otherwise what could in fact happen is that, while the valve is open, the microprocessor does not receive enough power from the battery to allow it to control the closing of the valve. This condition is guaranteed by choosing a proper type of microprocessor that is capable to work at voltages that are sufficiently lower than the minimum ones required for the activation of a bistable solenoid for solenoid valve.

In addition it should also be considered that, having substantially removed any limit to the minimum value of battery voltage required for the activation of the solenoid valve and having thus increased the number of the possible activations of the solenoid valve, it is possible, without losing in performance as compared with a traditional central control unit, to unbalance the power supply circuit of the solenoid valve by adding a series resistance only during the stage of the valve opening, so that less power gets to the solenoid of the solenoid valve in the opening stage than in the closing stage. In case the pole P2 of the switch S is of electronic transistor type, that would be possible by using transistors with values of Vcesat (collector-emitter in conditions of saturation voltage) for the opening control circuit that are higher than the ones of the transistors of the closing control circuit.

## Claims

1. Electronic control device for bistable type solenoid valve, particularly for watering systems, comprising a power supply battery (B) and a logic control unit (M) to transfer electric power from the battery (B) to the solenoid valve (X_{L}), **characterized in that** it comprises a condenser (C) set in parallel to the battery (B) and a switch (S) having first switching means (P1) interposed between the battery (B) and the condenser (C) and second switching means (P2, P3) interposed between the condenser (C) and the solenoid valve (X_{L}), said switch (S) being operated by said logic control unit (M) in order to determine, in a first operating condition, the charging of the condenser (C) and, in a second and third operating condition, the application of control voltages with opposite sign from the condenser (C) to the solenoid valve (XL) for the closing and, respectively, the opening of the same solenoid valve, said logic control unit (M) being programmed in such a way that each request for the opening of the solenoid valve brings about the setting of the switch (S) in said first operating condition for the charging of the condenser (C) in first place, then the preliminary starting of the switch (S) in said second operating condition for the closing of the solenoid valve after a first preset time has elapsed since the previous closing operation of the same solenoid valve, then again the return of the switch (S) in said first operating condition for the new charging of the condenser (C) and finally the starting of the switch (S) in said third operating condition for the opening of the solenoid valve after a subsequent second preset time shorter than the first one.

2. Device according to claim 1, **characterized in that** said first preset time is equal to 8 seconds.

3. Device according to claim 2, **characterized in that** said second preset time is equal to 2 seconds.

4. Device according to claim 1, **characterized in that** said logic control unit (M) comprises a microprocessor that is capable to operate with a voltage lower than the minimum one required for the activation of the solenoid valve.

5. Device according to claim 1, **characterized in that** it comprises means for reducing the control voltage that is applied to the solenoid valve for the opening of the same with respect to the one made available by the condenser (C).

6. Device according to claim 5, **characterized in that** said means consist of a series resistance associated with the second pole (P2) of the switch (S).

## Patentansprüche

1. Elektronische Steuervorrichtung für ein bistabiles Magnetventil, insbesondere für Bewässerungssysteme, welche eine Energieversorgungsbatterie (B) und eine logische Steuereinheit (M) aufweist, um die elektrische Energie von der Batterie (B) zu dem Magnetventil (X_{L},) zu übertragen, **dadurch gekennzeichnet, daß** sie einen Kondensator (C) aufweist, welcher parallel zu der Batterie (B) über einen Schalter (S) geschaltet ist, welcher eine erste Schalteinrichtung (P1 ) hat, welche zwischen der Batterie und dem Kondensator (C) angeordnet ist, und eine zweite Schalteinrichtung (P2, P3) hat, welche zwischen dem Kondensator (C) und dem Magnetventil (X_{L},) angeordnet ist, der Schalter (S) durch die logische Steuereinheit (M) betreibbar ist, um in einem ersten Arbeitszustand die Aufladung des Kondensators (C) und in einem zweiten und dritten Arbeitszustand Steuerspannungen mit zu dem Kondensator (C) entgegengesetztem Ladungsvorzeichen an das Magnetventil (X_{L}) zum Schließen und jeweils zum Öffnen des Magnetventils anzulegen, die logische Steuereinheit (M) derart programmiert ist, daß bei jeder Anforderung zum Öffnen des Magnetventils der Schalter (S) zuerst in den ersten Arbeitszustand zum Aufladen des Kondensators (C) gebracht wird, dann vorläufig der Schalter (S) in den zweiten Arbeitszustand zum Schließen des Magnetventils versetzt wird, nachdem eine erste Vorgabezeit seit dem vorangehenden Schließvorgang des Magnetventils verstrichen ist, dann der Schalter (S) wiederum in den ersten Arbeitszustand zum neuen Aufladen des Kondensators (C) gebracht wird, und schließlich der Schalter (S) im dritten Arbeitszustand zum Öffnen des Magnetventils nach einer anschließenden zweiten Vorgabezeit in Betrieb gesetzt wird, welche kürzer als die erste Vorgabezeit ist.

2. Steuervorrichtung nach Anspruch 1, **dadurch gekennzeichnet, daß** die erste Vorgabezeit 8 Sekunden beträgt.

3. Steuervorrichtung nach Anspruch 2, **dadurch gekennzeichnet, daß** die zweite Vorgabezeit 2 Sekunden beträgt.

4. Steuervorrichtung nach Anspruch 1, **dadurch gekennzeichnet, daß** die logische Steuereinheit (M) einen Mikroprozessor aufweist, welcher mit einer Spannung betreibbar ist, welche niedriger als die zu Aktivierung des Magnetventils erforderliche minimale Spannung ist.

5. Steuervorrichtung nach Anspruch 1, **dadurch gekennzeichnet, daß** sie eine Einrichtung zur Herabsetzung der Steuerspannung aufweist, die an das Magnetventil zum Öffnen desselben im Vergleich zu einer Spannung angelegt wird, die durch den Kondensator (C) verfügbar ist.

6. Steuervorrichtung nach Anspruch 5, **dadurch gekennzeichnet, daß** die Einrichtung einen in Serie geschalteten Widerstand aufweist, welcher mit dem zweiten Pol (P2) des Schalters (S) verbunden ist.

## Revendications

1. Dispositif de commande électronique pour électrovalve du type bistable, notamment pour des systèmes d'arrosage, comprenant une batterie d'alimentation électrique (B) et une unité de commande logique (M) servant à transmettre l'énergie électrique de la batterie à l'électrovalve (X_{L}), **caractérisé en ce qu'**il comprend un condensateur (C) placé en parallèle avec la batterie (B) et un commutateur (S) qui possède un premier moyen de commutation (P1) interposé entre la batterie (B) et le condensateur (C) et un deuxième moyen de commutation (P2, P3) interposé entre le condensateur (C) et l'électrovalve (X_{L}), ledit commutateur (S) étant activé par ladite unité de commande logique (M) afin de déterminer, dans un premier état de fonctionnement, la charge du condensateur (C) et, dans un deuxième et un troisième état de fonctionnement, l'application de tensions de commande de signes opposés, du condensateur (C) à l'électrovalve (X_{L}) pour la fermeture et, respectivement, l'ouverture de cette même électrovalve, ladite unité de commande logique (M) étant programmée de manière que chaque demande d'ouverture de l'électrovalve amène le réglage du commutateur (S) dans ledit premier état de fonctionnement pour la charge du condensateur (C) en premier lieu, puis le démarrage préliminaire du commutateur (S) dans le deuxième état de fonctionnement pour la fermeture de l'électrovalve après qu'un premier temps préfixé s'est écoulé depuis la précédente opération de fermeture de cette même électrovalve, puis, de nouveau, le retour du commutateur (S) dans ledit premier état de fonctionnement pour une nouvelle charge du condensateur (C), et, enfin, le démarrage du condensateur (C) dans ledit troisième état de fonctionnement pour l'ouverture de l'électrovalve après un deuxième temps préfixé ultérieur plus court que le premier temps.

2. Dispositif selon la revendication 1, **caractérisé en ce que** ledit premier temps préfixé est égal à 8 s.

3. Dispositif selon la revendication 2, **caractérisé en ce que** ledit deuxième temps préfixé est égal à 2 s.

4. Dispositif selon la revendication 1, **caractérisé en ce que** ladite unité de commande logique (M) comprend un microprocesseur qui peut fonctionner avec une tension inférieure à la tension minimale nécessaire pour l'activation de l'électrovalve.

5. Dispositif selon la revendication 1, **caractérisé en ce qu'**il comprend un moyen permettant de réduire la tension de commande qui est appliquée à l'électrovalve pour l'ouverture de cette dernière par rapport à celle rendue disponible par le condensateur (C).

6. Dispositif selon la revendication 5, **caractérisé en ce que** ledit moyen consiste en une résistance série qui est associée au deuxième pôle (P2) du commutateur (S).
